# NOUVEAU FASCICULE DE BREVET EUROPEEN

(11) **EP 0 214 919 B2**
(45) Date de publication et mention de la décision concernant l'opposition: **18.06.1997**
(45) Mention de la délivrance du brevet: 06.11.1991
(21) Numéro de dépôt: 86440073.4
(22) Date de dépôt: 28.08.1986
(51) Int. Cl.: B60P 3/08

(54) **Convoi routier porte-véhicules à unité de chargement dissociable du châssis cabine**
Fahrzeugtransporter mit von der Kabine abkoppelbarer Ladeeinheit
Vehicle carrier road train with a loading unit dissociative from the cabin undercarriage

(30) Priorité: 28.08.1985 FR 8512914
(43) Date de publication de la demande: 18.03.1987
(73) Titulaire: LOHR INDUSTRIE, 67980 Hangenbieten (FR)
(72) Inventeur: Lohr, Robert, F-67980 Hangenbieten (FR)
(74) Mandataire: Metz, Paul

(56) Documents cités:
- DE-C- 866 913
- FR-A- 1 587 765
- FR-A- 2 165 498
- IT-C- 904 996
- IT-U- 202 405
- dépliant A. Orlandi
- dépliant F.X. Kögel GmbH & Co.
- dépliant OFFICINE FRANCHIN s.a.s.
- dépliant Ray Smith
- DIN Specifications 70013 et 70014

## Description

La présente invention se rapporte à un convoi routier articulé du genre défini dans le préambule de la revendication 1.

Le document de brevet IT-C-904 996 décrit un convoi articulé du type énoncé dans le préambule de la revendication.

Dans le convoi connu, la carrosserie-camion comporte à l'arrière une interface d'essieu pouvant être déplacée axialement le long du châssis et portant au moins un couple de roues et à l'avant, des moyens de support au sol à l'état déposé permettant son accouplement ou son désaccouplement par le seul déplacement d'engagement ou de dégagement du châssis-cabine sous la carrosserie-camion.

Dans le mode de réalisation décrit dans ce document de brevet, la carrosserie-camion et la remorque constituent deux porte-conteneurs ; la remorque comporte deux essieux avant et arrière et la liaison entre la remorque et la carrosserie-camion est assurée au moyen d'un timon d'attelage, le timon coopérant avec un crochet fixé sur la carrosserie-camion. Le timon et le crochet d'attelage sont disposés au-dessus du niveau inférieur des longerons de la carrosserie-camion. La remorque et la carrosserie-camion constituent deux unités séparées qui ne peuvent pas être chargées et déchargées sans être dissociées.

Le but de la présente invention est de transposer aux convois routiers articulés les avantages d'exploitation des semi-remorques.

Plus particulièrement, le but de la présente invention consiste à permettre, à partir d'un châssis-cabine de camion, d'une carrosserie-camion et d'une remorque, de constituer, selon les besoins d'exploitation, soit un convoi routier motorisé, soit une unité de chargement prête à l'enlèvement par ledit châssis-cabine sans aide extérieure.

Ce but est atteint conformément à la présente invention par le convoi articulé défini dans la revendication 1.

Selon une caractéristique additionnelle, le point d'accouplement principal est situé dans l'empattement du véhicule moteur.

Plus précisément, dans un des modes de réalisation, le point d'accouplement est une liaison articulée à deux degrés de liberté dont on supprime les effets par un ou plusieurs verrouillages rapides de la structure porteuse au châssis du véhicule moteur, de préférence avec des moyens d'autocentrage. Ainsi définie, l'invention présente le principal avantage de rentabilité par l'utilisation d'un châssis cabine moteur avec une structure semi-portée et sa remorque dans les mêmes conditions favorables et bénéfiques d'exploitation qu'une semi-remorque classique tout en possédant une capacité de chargement supérieure.

Divers autres avantages supplémentaires sont mentionnés ci-après :
. unité de roulage compacte carrossée à la manière d'un camion porte-véhicules classique
. simplicité de construction en raison de la grande facilité de préparation du châssis
. accouplement et désaccouplement sans aide extérieure à vide comme en charge
. opérations de chargement et de déchargement sans immobilisation du châssis cabine et de son chauffeur
. possibilité de chargement et de déchargement sans châssis cabine.

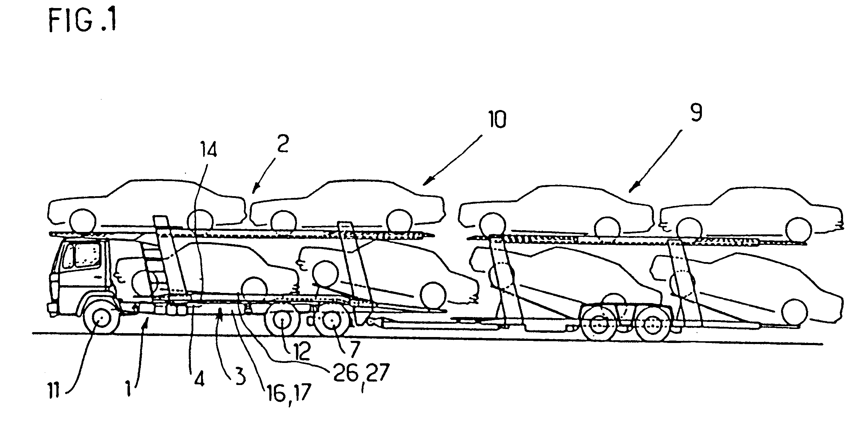

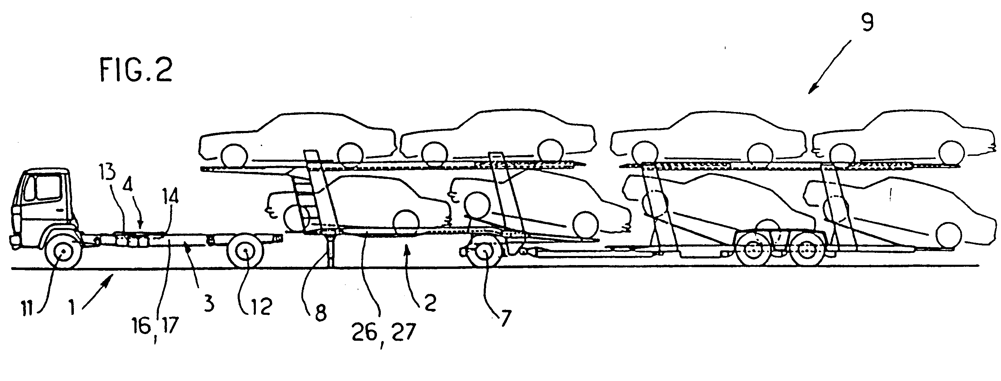

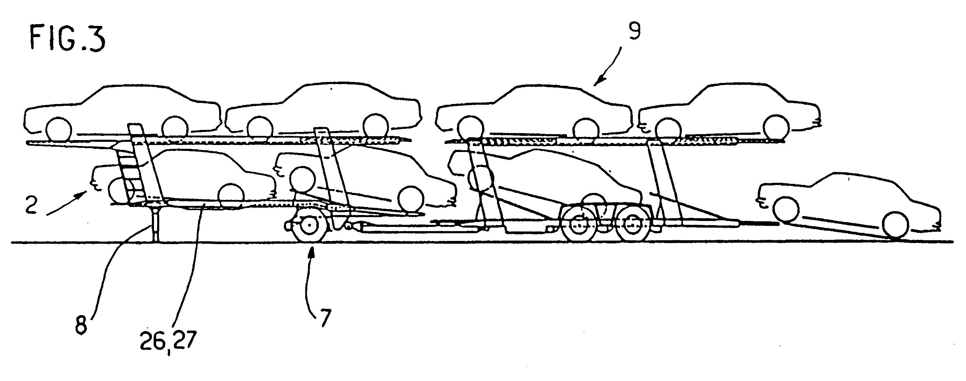

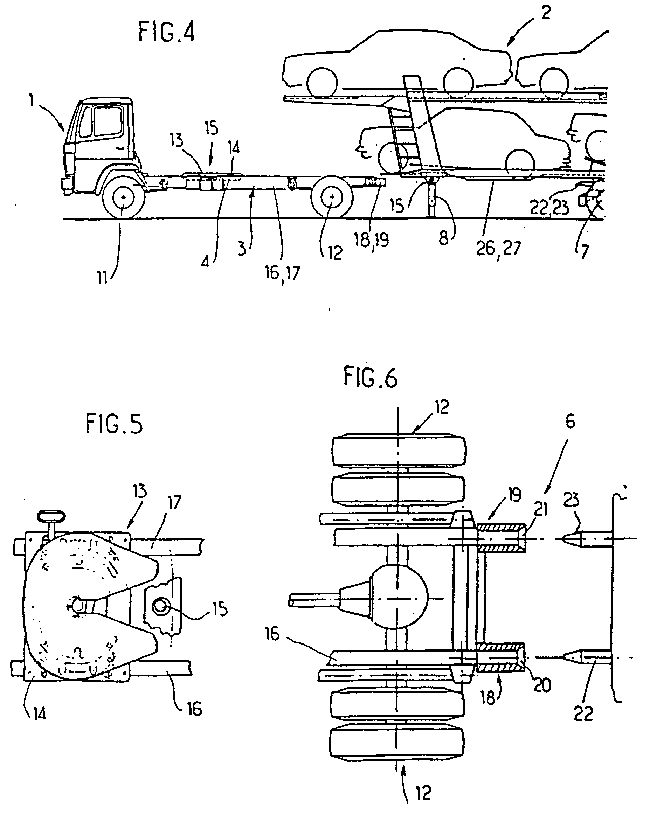

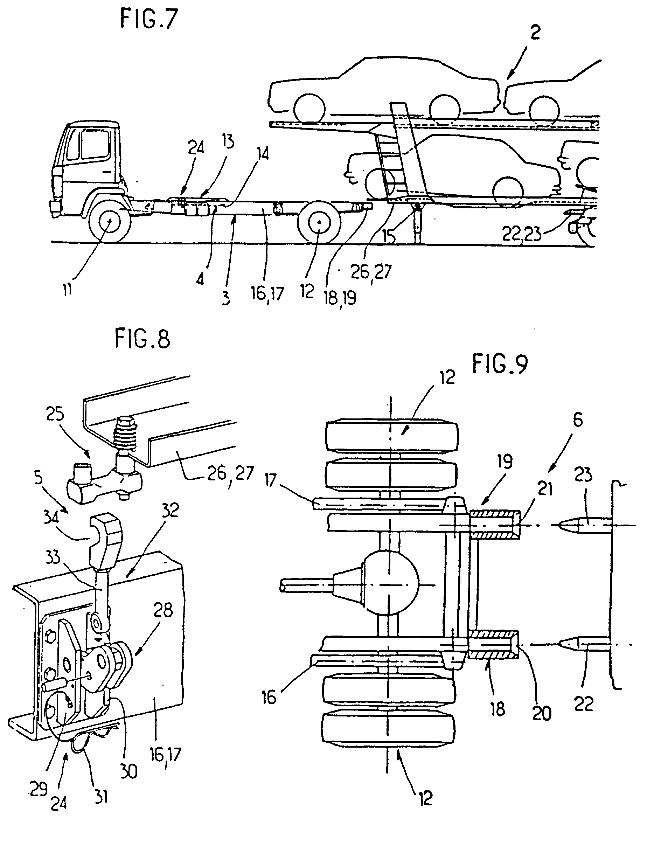

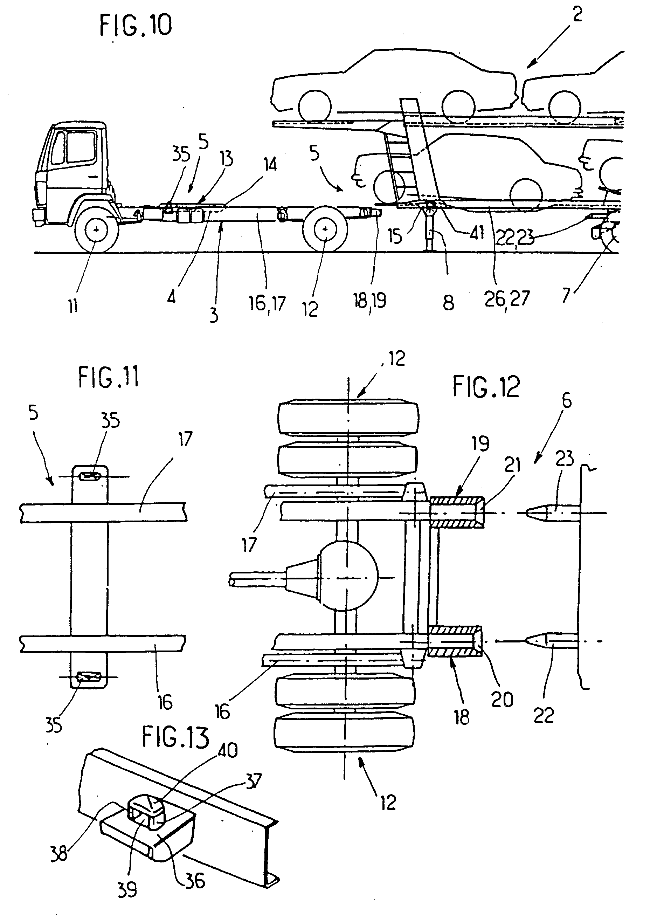

Les caractéristiques techniques de la présente invention et d'autres avantages ressortiront de la description ci-après effectuée à titre d'exemple non limitatif sur un mode d'exécution en référence au dessins annexé dans lequel:
. la figure 1 est une vue d'ensemble de profil représentant le châssis cabine moteur accouplé à la carrosserie camion ;
. la figure 2 est une vue d'ensemble de profil du convoi dissocié ;
. la figure 3 est une vue de l'unité de chargement en attente d'enlèvement sur une aire de stationnement ou de chargement ;
. les figures 4, 5 et 6 sont des vues de profil et en plan respectivement de l'extrémité avant du convoi, des moyens d'accouplement et des moyens d'autocentrage ;
. les figures 7, 8 et 9 sont des vues de profil, en perspective et en plan respectivement de l'extrémité avant du convoi, des moyens de verrouillage à genouillère et des moyens d'autocentrage ;
. les figures 10, 11, et 12 sont des vues de profil et en plan respectivement de l'extrémité avant du convoi, des moyens de verrouillage à coins d'immobilisation et des moyens d'autocentrage ;
. la figure 13 est une vue en perspective d'un dispositif de verrouillage à coins d'immobilisation.

On décrira ci-après un exemple de réalisation du convoi articulé selon l'invention et plusieurs types de moyens de verrouillage. Il est bien entendu que diverses variantes directes entrent parfaitement dans son cadre.

Par ailleurs, la désignation de véhicules couvre tous matériels roulants : voitures, tracteurs, camions, etc...

Le convoi routier porte-véhicules selon l'invention se compose de façon générale d'un châssis cabine moteur 1 ou véhicule moteur et d'une carrosserie camion 2 rapportée et montée dissociable sur le châssis 3 du véhicule moteur à l'aide d'une liaison d'accouplement 4 à moyens d'accouplement et de désaccouplement faciles et rapides à mettre en oeuvre sans aucune aide extérieure. Des moyens de verrouilage 5 et d'autocentrage 6 permettent la fixation au châssis et la présentation rapide et correcte en position d'accouplement.

Cette carrosserie camion 2 comporte, dans le mode d'exécution représenté, mais de façon non restrictive, la particularité de posséder, à l'arrière, au moins un essieu porteur 7 et, à l'avant, des moyens de maintien à l'état dissocié, par exemple un jeu de béquilles 8 escamotables, lui permettant de rester en position prête à l'accouplement dans les périodes de stationnement en non-utilisation routière constituant ainsi une unité porteuse d'un chargement prête à l'enlèvement par un châssis cabine moteur adapté c'est-à-dire pourvu des moyens d'accouplement et de verrouillage complémentaires.

Une unité de puissance intégrée à l'une ou l'autre partie du convoi autorise le chargement et le déchargement des véhicules sans la présence du châssis cabine.

La carrosserie camion dissociable 2 est attelée à une remorque 9 également du type porte-véhicules pour constituer le convoi routier 10 articulé et dissociable selon l'invention.

On examinera plus précisément ci-après une réalisation particulière à liaison centrale disposée sur le châssis 3 dans l'empattement du véhicule moteur 1 entre ses trains de roues avant 11 et arrière 12.

Bien entendu, d'autres variantes s'avèrent possibles, notamment par modification de l'emplacement du point de liaison présentant les moyens d'accouplement et de désaccouplement rapides.

Dans cet esprit, l'emplacement dudit point de liaison pourra être choisi exactement au-dessus ou au niveau du train de roues arrière 12.

Dans le mode de réalisation examiné, l'organe assurant la liaison centrale est à mouvements d'accouplement et de désaccouplement longitudinaux. Plus particulièrement, il est constitué par l'élément de liaison et d'articulation d'une semi-remorque classique, connu sous la dénomination sellette, référencée 13.

Cette sellette est par exemple solidarisée au châssis par l'intermédiaire d'un sommier 14. Le pivot de sellette 15 est monté en sous-face sur l'avant de la carrosserie camion 2.

Les deux degrés de liberté qu'autorise la sellette sont neutralisés par des fixations appropriées de la structure porteuse sur le châssis 3 du véhicule moteur en extrémité avant ou arrière des longerons 16 et 17, par exemple par des fixations à verrouillage rapide telles que celles représentées sur les figures.

Ces fixations à verrouillage rapide sont efficacement complétées par des moyens de centrage ou d'autocentrage disposés, par exemple, en extrémité de châssis coopérant avec des structures complémentaires prévues sur la partie inférieure de la carrosserie camion.

Celles-ci pourront avantageusement être réalisées par une conformation appropriée des extrémités des longerons 16 et 17 du châssis cabine, par exemple sous la forme de douilles 18 et 19 à cônes d'entrée respectivement 20 et 21 coopérant chacun avec un doigt de centrage 22 ou 23, monté sur la traverse arrière de la carrosserie camion pour venir s'emmancher, lors du mouvement d'accouplement, dans les douilles 18 et 19 et, ainsi, le guider.

A titre de variante, on peut imaginer de disposer la se lette à l'arrière et de l'utiliser en même temps comme moyen de centrage, les points d'immobilisation par verrouillage étant de préférence, dans cette version, situés à l'avant.

Concernant les moyens de verrouillage 5, on pourra utiliser les dispositifs représentés sur les figures 8, 11 et 13. Bien entendu, d'autres dispositifs classiques à verrouillage rapide pourront être employés sans pour autant modifier l'invention.

Ainsi, dans une première variante (figures 7, 8, 9), les longerons 16 et 17 du châssis seront équipés vers l'avant de dispositifs de verrouillage rapide à genouillère tels que 24 coopérant avec un doigt de verrouillage 25 monté mobile en contrainte d'immobilisation élastique autour d'un axe vertical à l'extrémité avant de chaque longeron de châssis 26 et 27 de la carrosserie camion 2.

Le dispositif de verrouillage à genouillère se compose d'un verrou 28 monté basculant entre deux ailes verticales 29 et 30, immobilisé en position basse de verrouillage par une goupille de sûreté 31. Sur ce verrou est monté articulé un levier de maintien 32 formé d'une biellette 33 prolongé par une pièce terminale en crochet 34 venant s'accrocher sur le doigt de verrouillage 25.

Pour faciliter la manoeuvre du verrou, un des axes présente une surface latérale conformée en six pans à la manière d'un écrou classique.

Une autre variante de dispositif de verrouillage comporte des coins escamotables d'immobilisation rapide 35 tels que ceux utilisés pour les conteneurs (figures 10, 11, 12 et 13).

Ces coins seront fixés sur la traverse à l'avant du châssis à l'extérieur des longerons.

Ces coins coopèrent avec les éléments bas du châssis cabine en vue d'une immobilisation rapide sur son châssis.

Ils se composent de façon classique d'une platine support 36 portant deux saillies 37 et 38 espacées par un intervalle 39. Une pièce de blocage en cône 40 est montée orientable en rappel élastique vers le bas. En position haute, elle repose sur les extrémités des saillies 37 et 38. En position basse de blocage, elle s'engage dans l'intervalle 39 venant immobiliser par pincement la pièce ou l'élément 41 à maintenir contre la platine 36 (figure 13).

L'accouplement pourra aussi être assuré avantageusement par des structures à glissement ou à roulage : glissières, rails,... présentant d'une part des moyens d'autocentrage en extrémité pour permettre un engagement rapide et d'autre part des dispositifs de blocage en fin de course et de verrouillage.

Si le châssis porteur permet de supporter toute la charge de la carrosserie camion et le report de charge de la remorque, on peut imaginer de supprimer le train arrière de la carrosserie camion et le remplacer par deux béquilles escamotables permettant avec les béquilles avant 8 de maintenir la structure camion en position de stationnement prête à l'accouplement.

## Revendications

1. Convoi routier articulé formé d'un châssis-cabine (1), d'une carrosserie-camion (2) et d'une remorque, la carrosserie-camion étant montée dissociable du châssis-cabine par une liaison d'accouplement rapide (4) associée à des moyens de fixation à verrouillage et déverrouillage rapides (5) et à des moyens de centrage (6), les moyens de fixation à verrouillage et déverrouillage rapides (5) combinés avec les moyens de centrage (6) assurant une liaison rigide entre le châssis-cabine (1) et la carrosserie-camion (2), la carrosserie-camion (2) étant reliée de façon articulée à la remorque (9) par une liaison d'attelage dont l'extrémité avant vient s'accoupler avec un élément récepteur fixé à la carrosserie-camion (2), cette dernière comportant à l'avant des moyens de support (8) au sol à l'état déposé et à l'arrière, un essieu (7) ou des moyens de support au sol à l'état déposé permettant son accouplement ou son désaccouplement par le seul déplacement d'engagement ou de dégagement du châssis-cabine (1) sous ladite carrosserie-camion (2), caractérisé en ce que
- la carrosserie-camion (2) et la remorque (9) sont toutes deux des unités porte-véhicules pouvant être chargées et déchargées sans être dissociées ;
- l'élément récepteur de la liaison d'attelage est disposé au-dessous des longerons (26, 27) du châssis de la carrosserie-camion (2);
- la remorque (9) est à essieux centraux, et
- l'essieu (7) ou les moyens de support au sol situés à l'arrière de la carrosserie-camion (2) sont fixes longitudinalement par rapport à ladite carrosserie-camion (2).

2. Convoi routier selon la revendication 1, caractérisé en ce que la liaison rigide est obtenue par coopération d'une sellette (13) et des moyens de centrage.

3. Convoi routier selon la revendication 1, caractérisé en ce que les moyens de fixation sont disposés au niveau des roues arrières (12) du châssis-cabine (1).

4. Convoi routier selon la revendication 1, caractérisé en ce que les moyens de fixation à verrouillage et déverrouillage rapides de la carrosserie-camion (2) au châssis-cabine (1) sont des dispositifs à genouillères.

5. Convoi routier selon la revendication 1, caractérisé en ce que les moyens de fixation à verrouillage et déverrouillage rapides sont des coins d'immobilisation de conteneur.

6. Convoi routier selon la revendication 1, caractérisé en ce que les moyens de fixation sont à glissières.

7. Convoi routier selon la revendication 1, caractérisé en ce que les moyens de fixation sont à structures de roulage.

8. Convoi routier selon la revendication 1, caractérisé en ce que les moyens de centrage sont des moyens d'auto-centrage disposés, d'une part, à l'arrière du châssis-cabine (1) et, d'autre part, à l'arrière de la carrosserie-camion (2).

9. Convoi routier selon la revendication 1, caractérisé en ce que les moyens d'auto-centrage sont des douilles (18) ou (19) à cône d'entrée (20) ou (21) montés à l'extrémité de chaque longeron (16) et (17) du châssis (3) du châssis-cabine (1) coopérant avec des doigts de centrage (22) ou (23) montés sur la traverse arrière de la carrosserie-camion (2) déposable afin de venir s'emmancher lors du mouvement d'accouplement dans les douilles (18) ou (19).

10. Convoi routier selon les revendications précédentes, caractérisé en ce qu'il existe des moyens de chargement/déchargement autonomes sur la carrosserie camion et/ou sur la remorque.

11. Convoi routier selon la revendication 1, caractérisé en ce que la carosserie-camion (2) est entièrement portée par le châssis-cabine (1).

## Claims

1. Articulated road train consisting of a cab chassis (1), a lorry body (2) and a trailer, the lorry body being mounted so as to be detachable from the cab chassis by means of a rapid coupling connection (4) associated with rapid locking and unlocking securing means (5) and with centring means (6), the rapid locking and unlocking securing means (5) combined with the centring means (6) providing a rigid connection between the cab chassis (1) and the lorry body (2), the lorry body (2) being connected in an articulated manner to the trailer (9) by a coupling connection of which the front end couples with a receiver element secured to the lorry body (2), the latter comprising, at the front, means (8) for supporting it on the ground in the detached state and, at the rear, an axle (7) or means for supporting it on the ground in the detached state, enabling the lorry body to be coupled or uncoupled simply by the engaging or disengaging movement of the cab chassis (1) under said lorry body (2), characterized in that:
- the lorry body (2) and the trailer (9) are both vehicle-carrying units which can be loaded and unloaded without being separated;
- the coupling connection receiver element is disposed below sidemembers (26, 27) of the chassis of the lorry body (2);
- the trailer (9) has central axles; and
- the axle (7) or the means for supporting the lorry body (2) on the ground located at the rear thereof are fixed longitudinally relative to said lorry body (2).

2. Road train according to Claim 1, characterized in that the rigid connection is brought about by the co-operation of a fifth wheel (13) and centring means.

3. Road train according to Claim 1, characterized in that the securing means are disposed on the rear wheels (12) of the cab chassis (1).

4. Road train according to Claim 1, characterized in that the rapid locking and unlocking means for securing the lorry body (2) to the cab chassis (1) are devices of the toggle joint type.

5. Road train according to Claim 1, characterized in that the rapid locking and unlocking securing means are container-immobilizing blocks.

6. Road train according to Claim 1, characterized in that the securing means have slide rails.

7. Road train according to Claim 1, characterized in that the securing means have freight structures.

8. Road train according to Claim 1, characterized in that the centring means are self-centring means disposed, on the one hand, at the rear of the cab chassis (1) and, on the other, at the rear of the lorry body (2).

9. Road train according to Claim 1, characterized in that the self-centring means are bushes (18) or (19) with an inlet cone (20) or (21) mounted at the end of each sidemember (16) and (17) of the chassis (3) of the cab chassis (1) co-operating with centring fingers (22) or (23) mounted on the rear crossmember of the detachable lorry body (2) in order to fit into the bushes (18) or (19) during the coupling movement.

10. Road train according to the preceding claims, characterized in that autonomous loading and unloading means are provided on the lorry body and/or on the trailer.

11. Road train according to Claim 1, characterized in that the lorry body (2) is entirely supported by the cab chassis (1).

## Patentansprüche

1. Gelenkiger Fahrzeugtransporter, bestehend aus einem Fahrgestell mit Kabine (1), einer Lastwagenkarosserie (2) und einem Anhänger, wobei die Lastwagenkarosserie abkuppelbar vom Fahrgestell mit Kabine montiert ist, und zwar über eine Schnellkupplungsverbindung (4), verbunden mit Befestigungseinrichtungen zur raschen Verriegelung und Entriegelung (5) und mit Einrichtungen zur Zentrierung (6), wobei die Befestigungseinrichtungen zur raschen Verriegelung und Entriegelung (5) mit den Einrichtungen zur Zentrierung (6) kombiniert sind, so daß eine starre Verbindung zwischen dem Fahrgestell mit Kabine (1) und der Lastwagenkarosserie (2) gewährleistet ist, und die Lastwagenkarosserie (2) gelenkig über eine Kuppelverbindung mit dem Anhänger (9) verbunden ist, deren vorderes Ende sich in ein an der Lastwagenkarosserie (2) befestigtes Aufnahmeelement einkuppelt, wobei letztere vorne eine Einrichtung zum Abstützen (8) auf dem Boden aufweist, wenn sie abgestellt ist und hinten eine Wagenachse (7) oder eine Einrichtung zum Abstützen auf dem Boden, wenn sie abgestellt ist, um allein durch das Heranfahren oder das Wegfahren des Fahrgestelles mit Kabine unter die Lastwagenkarosserie sein Ankuppeln oder sein Abkuppeln zu ermöglichen,
**dadurch gekennzeichnet,** daß
- die Lastwagenkarosserie (2) und der Anhänger (9) beide Fahrzeugtransporteinheiten sind, die ohne abgetrennt zu werden be- oder entladbar sind;
- das Aufnahmeelement der Kuppelverbindung unterhalb der Längsträger (26,27) des Unterbaus der Lastwagenkarosserie (2) angeordnet ist;
- der Anhänger (9) mit Mittelachsen ausgestattet ist, und
- daß die Tragachse (7) oder die zum Abstützen auf dem Boden dienenden Einrichtungen, die am hinteren Ende der Lastwagenkarosserie (2) angeordnet sind, in Bezug auf die Lastwagenkarosserie (2) in Längsrichtung feststehend sind.

2. Fahrzeugtransporter nach Anspruch 1,
**dadurch gekennzeichnet,** daß man die starre Verbindung durch Zusammenwirken eines Drehschemels (13) Einrichtungen zur Zentrierung erhält.

3. Fahrzeugtransporter nach Anspruch 1,
**dadurch gekennzeichnet,** daß die Befestigungseinrichtungen auf Höhe der hinteren Räder (12) des Fahrgestells mit Kabine (1) angeordnet sind.

4. Fahrzeugtransporter nach Anspruch 1,
**dadurch gekennzeichnet,** daß die Befestigungseinrichtungen zur raschen Verriegelung und Entriegelung der Lastwagenkarosserie (2) am Fahrgestell mit Kabine (1) Kniehebelvorrichtungen sind.

5. Fahrzeugtransporter nach Anspruch 1,
**dadurch gekennzeichnet,** daß die Befestigungseinrichtungen zur raschen Verriegelung und Entriegelung Container-Zentrier-Ecken sind.

6. Fahrzeugtransporter nach Anspruch 1,
**dadurch gekennzeichnet,** daß die Befestigungseinrichtungen Spannschienen sind.

7. Fahrzeugtransporter nach Anspruch 1,
**dadurch gekennzeichnet,** daß die Einrichtungen zur Befefstigung Rollenkonstruktionen sind.

8. Fahrzeugtransporter nach Anspruch 1,
**dadurch gekennzeichnet,** daß die Einrichtungen zur Zentrierung Einrichtungen zur Selbstzentrierung sind, die einerseits am rückwärtigen Teil des Fahrgestelles mit Kabine (1) und andererseits am rückwärtigen Teil der Lastwagenkarosserie (2) angeordnet sind.

9. Fahrzeugtransporter nach Anspruch 1,
**dadurch gekennzeichnet,** daß die Einrichtung zur Selbstzentrierung Buchsen (18) oder (19) mit Einfahrkonus (20) oder (21) sind, die am Ende jedes Längsholmes (16) oder (17) des Fahrgestelles (3) der Einheit Fahrgestell mit Kabine (1) montiert sind, und die mit auf der rückwärtigen Traverse der auflegbaren Lastwagenkarosserie (2) montierten Zentrierbolzen (22) oder (23) zusammenwirken, die sich beim Kupplungsvorgang in die Buchsen (18) oder (19) hineinschieben.

10. Fahrzeugtransporter nach den vorhergehenden Ansprüchen,
**dadurch gekennzeichnet,** daß es an der Lastwagenkarosserie und/oder am Anhänger selbständige Einrichtungen zum Laden/Entladen gibt.

11. Fahrzeugtransporter nach Anspruch 1,
**dadurch gekennzeichnet,** daß die Lastwagenkarosserie (2) vollständig vom Fahrgestell mit Kabine (1) getragen ist.
